# FASCICULE DE BREVET EUROPEEN

(11) **EP 2 446 568 B1**
(45) Date de publication et mention de la délivrance du brevet: **15.05.2013**
(21) Numéro de dépôt: 10736748.4
(22) Date de dépôt: 22.06.2010
(51) Int. Cl.: H04J 3/16, H04J 3/06, H04L 12/417, H04W 74/08, H04W 84/18

(54) **PROCEDE DE COMMUNICATION PAR MULTIPLEXAGE TEMPOREL**
VERFAHREN ZUR ZEITMULTIPLEXÜBERTRAGUNG
METHOD OF TIME MULTILPEXED COMMUNICATION

(30) Priorité: 23.06.2009 FR 0903040
(43) Date de publication de la demande: 02.05.2012
(73) Titulaire: ADEUNIS RF, 38920 Crolles (FR)
(72) Inventeur: CHAMPANEY, Pascal, F-38660 Le Touvet (FR)
(74) Mandataire: Chevalier, Renaud Philippe
(86) Numéro de dépôt international: PCT/FR2010/000456
(87) Numéro de publication internationale: WO 2010/149874

(56) Documents cités:
- EP-A1- 0 635 959

## Description

### Domaine technique de l'invention

L'invention concerne un procédé de communication par multiplexage temporel entre un terminal maître et plusieurs terminaux esclaves.

### État de la technique

Les fréquences radio étant de plus en plus sollicitées, des solutions pour augmenter la densité des communications sont envisagées. Les procédés de communication par accès multiple à répartition dans le temps sont couramment utilisés, notamment dans la téléphonie mobile. L'accès multiple à répartition dans le temps (« Time Division Multiple Access », TDMA) est un mode de multiplexage temporel permettant de transmettre plusieurs signaux numériques sur un même canal de fréquences. Ainsi, plusieurs utilisateurs partagent le même canal. Le flux de données est généralement divisé en trames. Chaque trame est divisée en plusieurs intervalles de temps (« time slot » en anglais). Les utilisateurs transmettent des données successivement en utilisant leur propre intervalle de temps.

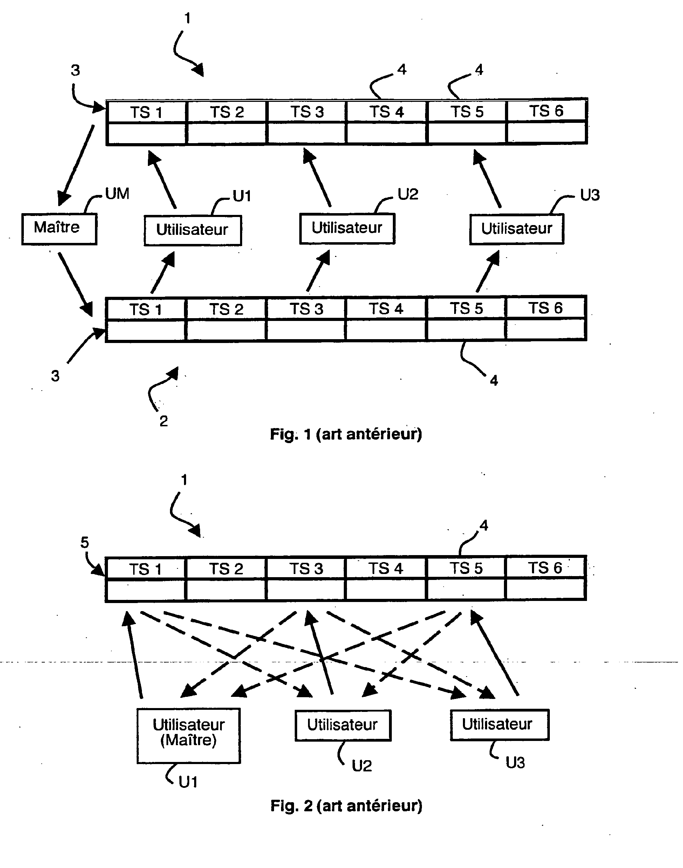

La figure 1 illustre un exemple de partage du temps TDMA entre divers utilisateurs, ici trois : U1, U2 et U3. Chaque intervalle de temps est attribué à un utilisateur par un équipement maître UM, par exemple une station de base, à l'issue d'une négociation s'effectuant sur un canal de service (non représenté). Toutes les communications transitent par cet équipement maître. Cette technologie utilise généralement deux bandes de fréquences, l'une pour la voie montante 1, c'est-à-dire pour transmettre les données des utilisateurs vers le maître, l'autre pour la voie descendante 2, du maître vers les utilisateurs. Chaque voie comporte une succession de trames 3 divisées, chacune, en plusieurs intervalles de temps 4. Par exemple, sur la figure 1, la trame 3 est divisée en six intervalles de temps 4. Cette technologie est utilisée, par exemple, dans la téléphonie mobile par la norme GSM/GPRS/EDGE.

La demande de brevet EP1843326 décrit un système de communication audio sans fil, multi utilisateurs, à multiplexage temporel. Dans ce système, la communication par liaison radio entre l'ensemble des utilisateurs est permanente et les utilisateurs communiquent par exemple en mode conférence audio ou en mode transmission de données par l'intermédiaire de requête et d'acquittement.

La figure 2 illustre le procédé de communication mis en oeuvre dans cette demande de brevet. Tous les utilisateurs (U1 à U3), munis de terminaux respectifs, peuvent communiquer entre eux et chacun entend les échanges des autres. Le procédé utilise une seule bande de fréquences 5. A chaque terminal est associé un intervalle de temps, dans lequel le terminal émet. Le terminal est en mode de réception sur les autres intervalles de temps. Par exemple, pendant que le terminal de l'utilisateur U1 est en émission dans son intervalle de temps TS1, il est écouté par les deux autres. Ensuite, il écoute successivement le terminal de l'utilisateur U2 pendant l'intervalle de temps TS3, puis U3 pendant l'intervalle de temps TS5.

L'un des terminaux (U1 sur la figure 2) assure la fonction de maître pour synchroniser les autres terminaux, devenus esclaves, et occupe de ce fait son propre intervalle de temps avec un signal de synchronisation.

Ce système permet d'obtenir des conversations de type conférence sur un seul canal de transmission 5. En outre, ce système de communication n'est pas dépendant du bon fonctionnement du maître. En effet, celui-ci étant un terminal d'utilisateur quelconque, il peut être remplacé par un autre terminal en cas de défaillance.

Néanmoins, ce système est limité par le nombre d'utilisateurs possibles en raison du nombre limité d'intervalles de temps 4, chaque intervalle de temps étant dédié à un terminal.

La demande de brevet européen EP0635959 décrit un procédé d'optimisation d'un canal de communication utilisé dans des systèmes de gestion du trafic aérien. Selon cette technique, chaque mobile participant identifie les intervalles de temps libres dans une période d'écoute, puis choisit de façon aléatoire l'un des intervalles de temps libres pour-émettre. Chaque mobile est synchronisé sur une horloge commune, par le biais d'une station maîtresse qui occupe systématiquement un intervalle par période. Le mobile quitte le canal en fin de transmission.

Néanmoins, ce procédé peut s'avérer inadapté à la gestion d'un grand nombre de terminaux. En effet, lorsque tous les intervalles de temps sont occupés, l'accès au réseau par un terminal ayant un besoin urgent de transmettre est difficile. Il existe donc un risque que des données prioritaires ne soient pas transmises en temps nécessaire.

### Objet de l'invention

L'invention vise un procédé de communication simple et facile à mettre en oeuvre permettant de faire communiquer un grand nombre quelconque de terminaux tout en garantissant l'accès au réseau à des données prioritaires.

Cet objectif est notamment atteint par le fait qu'une transmission de données est réalisée dans des trames successives, chaque trame étant divisée en une pluralité d'intervalles de temps, l'un des intervalles de temps de chaque trame étant réservé au terminal maître pour émettre un signal de synchronisation. Chaque terminal est soit en mode d'émission, soit en mode d'écoute, pendant chaque intervalle de temps. Chaque terminal esclave sélectionne en mode d'écoute un intervalle de temps libre dans une trame courante et émet en mode d'émission pendant au moins une trame suivante, des données dans l'intervalle de temps sélectionné, l'intervalle sélectionné devenant libre dès que le terminal esclave cesse d'émettre. Chaque terminal esclave attribue un niveau de priorité aux différents intervalles de temps libres de la trame, ne sélectionne un intervalle de temps pour émission que si le niveau de priorité de l'intervalle est suffisamment bas et attribue des niveaux de priorité variables en fonction du nombre d'intervalles de temps libres.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente schématiquement un procédé de communication selon l'art antérieur,
- la figure 2 représente schématiquement un autre procédé de communication selon l'art antérieur,
- les figures 3A à 3D représentent plusieurs étapes à titre d'exemple d'un premier mode de réalisation de procédé de communication selon l'invention,
- les figures 4A et 4B représentent des étapes d'un deuxième mode de réalisation de procédé selon l'invention,
- la figure 5 représente une étape d'une variante de réalisation du procédé selon les figures 3A à 3D, et
- les figures 6A à 6C représentent des étapes d'un autre mode de réalisation de procédé selon l'invention.

### Description de modes particuliers de réalisation

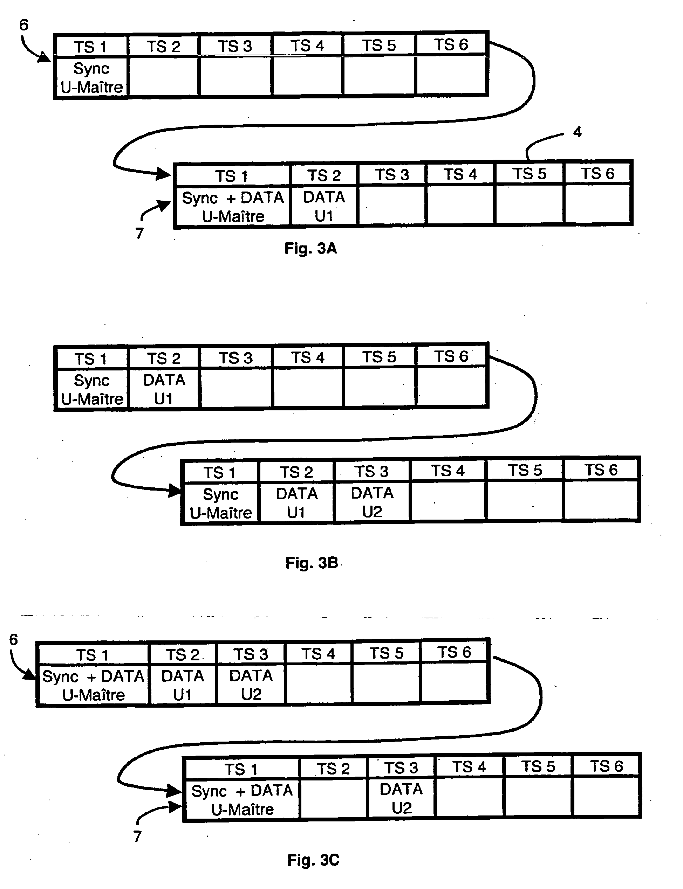

Les figures 3A à 3D représentent des étapes, dans le cadre d'un exemple, d'un premier mode de réalisation de procédé de communication selon l'invention. Ce procédé comporte des similarités avec celui décrit en relation avec la figure 2. La nouveauté réside dans le fait que les intervalles de temps des trames ne sont pas réservés à des terminaux respectifs et que le nombre de terminaux, ou noeuds de communication, peut être supérieur au nombre d'intervalles d'une trame.

La figure 3A représente deux trames successives d'une communication. La trame courante 6 est vide, hormis le signal de synchronisation Sync du terminal maître U-Maître. Dans les exemples décrits ici, le premier intervalle de temps TS1 est réservé au terminal maître, dans lequel ce dernier émet en permanence au moins le signal de synchronisation Sync. La fonction première d'un terminal maître est d'assurer la synchronisation, c'est-à-dire d'indiquer aux terminaux esclaves les limites de chaque trame. N'importe quel terminal peut assurer la fonction de maître et utiliser un intervalle de temps quelconque pourvu qu'il soit seul dans ce rôle à un instant donné.

Les intervalles de temps TS2 à TS6 sont libres dans la trame courante, c'est-à-dire qu'aucun terminal esclave n'émet dans l'un de ces intervalles. Chaque terminal esclave écoutant les autres terminaux, il connaît l'occupation des intervalles de temps 4 dans la trame courante 6. Il peut donc identifier, en mode d'écoute, un intervalle de temps libre et, en mode d'émission, transmettre des données dans l'intervalle de temps identifié pendant au moins une trame suivante 7. Ainsi, dans l'exemple de la figure 3A, l'intervalle de temps TS2 de la trame courante 6 a été identifié comme libre par le terminal de l'utilisateur U1, ce dernier peut donc émettre ses données DATA dans cet intervalle de temps pendant la trame suivante 7. Tant qu'il a des données à transmettre, le terminal conserve l'intervalle TS2 et émet dans le même intervalle de temps des trames subséquentes (non représentées). Si le terminal maître intervient dans la communication et a des données à transmettre, il émet ses données DATA dans son propre intervalle de temps (TS1), en plus du signal de synchronisation Sync, comme cela est représenté dans la trame suivante 7.

Si, au cours d'une trame, plusieurs terminaux identifient le même intervalle de temps libre, il se peut qu'ils rentrent en collision en émettant simultanément dans cet intervalle de temps. Les signaux analogiques se superposant dans l'intervalle de temps, seul le signal le plus fort sera reçu. Cette collision est gérée à l'aide d'un protocole de transmission usuel, tel que le protocole « poignée de main » (« handshake » en anglais).

Par exemple, en transmission de données, l'émission est destinée à l'un des terminaux qui retourne un accusé de réception. Ainsi, le terminal en collision dont l'émission n'a pas été reçue, ne recevra pas l'accusé de réception qui lui est destiné et réémettra ses données. En mode audio, on pourra prévoir que le terminal maître assure l'acquittement des émissions des terminaux esclaves. Ainsi, le terminal en collision n'ayant pas reçu d'accusé de réception du terminal maître, procède à l'identification d'un nouvel intervalle libre pour continuer à émettre.

A la figure 3B, un deuxième utilisateur U2 prend l'intervalle libre suivant TS3 pour émettre. Ainsi, deux intervalles de temps (TS2 et TS3) sont occupés par les terminaux des utilisateurs U1 et U2.

A la figure 3C, le terminal de l'utilisateur U1 n'a plus de données DATA à transmettre. L'intervalle de temps qu'il occupe dans la trame courante 6 devient de nouveau libre dans la trame suivante 7.

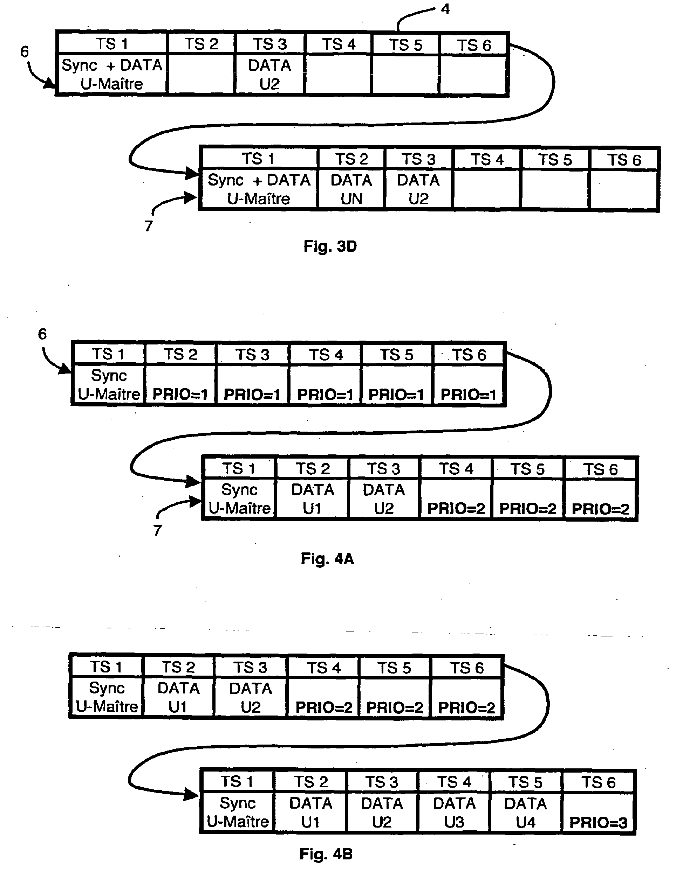

A la figure 3D, si un nouveau terminal esclave UN a des données à transmettre, il identifie l'intervalle de temps TS2 libéré dans la trame courante pendant une phase d'écoute et émet ses données DATA dans l'intervalle de temps TS2 des trames suivantes.

Dans de nombreuses applications de type conférence audio ou échange de données par requête et acquittement, le nombre d'utilisateurs peut être élevé. En revanche le nombre de terminaux, ou noeuds de communication, qui émettent simultanément des données est généralement faible par rapport au nombre de terminaux qui écoutent. En effet, une personne ne peut pas se concentrer sur plusieurs conversations simultanées. De même, un concentrateur réseau ne peut redevoir de données en provenance de plusieurs périphériques à un même instant. Ainsi, chaque terminal esclave qui a besoin d'émettre agit de manière « opportuniste » en se réservant le premier intervalle disponible qu'il voit. Le procédé décrit ci-dessus permet à un sous-ensemble restreint d'un grand nombre d'utilisateurs d'intervenir dans la communication. Ainsi, le nombre de terminaux peut être supérieur à celui des intervalles de temps dans une trame, pourvu que le nombre de terminaux qui émettent simultanément reste inférieur ou égal au nombre d'intervalles de temps.

Les figures 4A et 4B représentent des étapes d'un deuxième mode de réalisation du procédé de communication dans le cadre d'un exemple. Au fur et à mesure que des terminaux ont des données à transmettre, la disponibilité des intervalles de temps diminue. Cependant, il est possible qu'un des terminaux esclaves, ayant un besoin urgent de transmettre des données, se confronte à un réseau indisponible.

Le procédé comporte, dans ce mode de réalisation, un mécanisme qui permet d'assurer la disponibilité du canal de transmission à des données jugées prioritaires et ainsi de hiérarchiser l'accès au réseau.

Chaque terminal esclave, connaissant en permanence le nombre d'intervalles de temps libres, détermine lui-même un niveau de priorité de ces intervalles, par exemple selon un même algorithme mis en oeuvre dans chaque terminal. En outre, on affecte un niveau de priorité à chaque terminal, par exemple de manière fixe, programmée avant son utilisation. Ainsi, un terminal ne s'attribue un intervalle de temps que si son niveau de priorité est supérieur ou égal au niveau de priorité qu'il a déterminé pour l'intervalle.

Lorsque tous les intervalles de temps sont libres, ils ont un niveau de priorité minimum. Dans l'exemple de la figure 4A, ce niveau de priorité minimum est fixé à 1 (PRIO=1) pour chaque intervalle de temps libre de la trame courante 6. Alors, des terminaux de priorité 1 ou supérieure peuvent s'attribuer l'un quelconque des intervalles de temps libres. Si, dans la trame suivante 7, lé nombre d'intervalles de temps libres diminue, le niveau de priorité de ces intervalles libres augmente (PRIO=2). Alors, seuls des terminaux de priorité 2 ou supérieure pourront s'attribuer ces intervalles.

Dans l'exemple de la figure 4B, le réseau est très sollicité, il ne reste, par exemple, qu'un intervalle de temps libre. Son niveau de priorité est fixé au maximum pour garantir la disponibilité de l'intervalle à un terminal de priorité maximale, de priorité 3 par exemple.

Au lieu d'attribuer des priorités aux terminaux, on peut affecter des priorités à des catégories de données que chaque terminal peut transmettre. On peut envisager que, outre de la voix, un terminal puisse transmettre des signaux, par exemple un signal d'alarme qui aurait alors une priorité maximale.

On peut en outre prévoir une libération de force d'un intervalle utilisé par un terminal de priorité minimale. L'intervalle de temps nouvellement libéré provoquera un nouveau calcul des niveaux de priorité des intervalles libres et de la disponibilité du réseau à des terminaux de priorité suffisante.

Par exemple, un terminal de priorité faible, connaissant à chaque instant la disponibilité des intervalles de temps, peut de sa propre initiative libérer l'intervalle de temps qu'il occupe si le réseau est saturé.

Dans certaines applications, par exemple sur un chantier de construction, l'un des utilisateurs peut avoir un rôle important, par exemple le chef de chantier, et de ce fait il doit avoir une priorité absolue sur les autres dans la communication. Un tel utilisateur recevra le terminal maître, puisqu'un intervalle de temps lui est réservé dans chaque trame pour émettre la synchronisation à destination des autres terminaux. On pourra néanmoins envisager qu'un deuxième utilisateur soit aussi prioritaire.

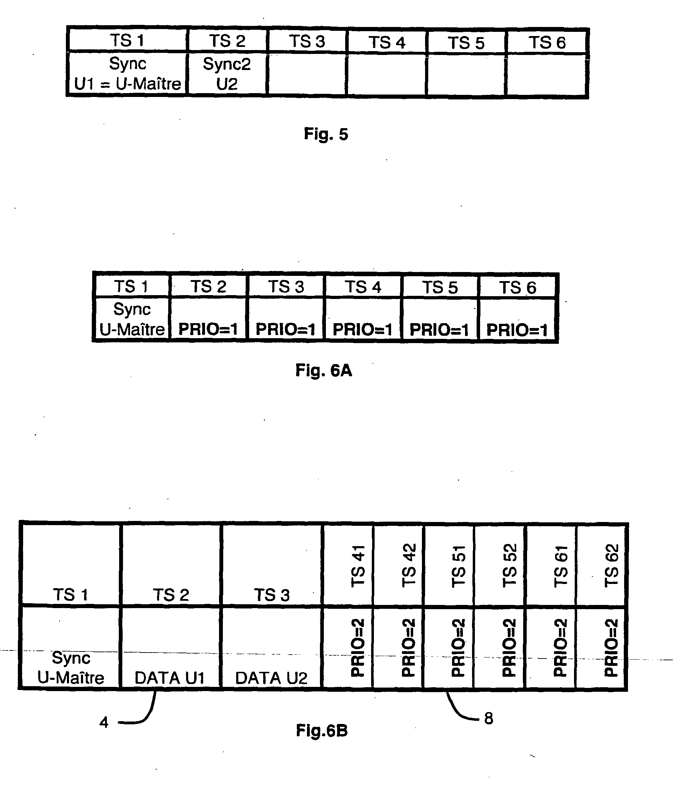

La figure 5 illustre une possibilité pour prévoir cette éventualité. Chaque terminal d'utilisateur prioritaire a un intervalle de temps qui lui est réservé. Par exemple, les utilisateurs U1 et U2 sont jugés prioritaires. Le terminal de U1 est le terminal maître. Le terminal de U2 s'attribue définitivement l'intervalle de temps, TS2 par exemple. Alors il ne reste que quatre intervalles de temps libres, c'est-à-dire TS3 à TS6.

Pour signifier qu'un utilisateur est prioritaire, son terminal émet un signal de synchronisation Sync2 différent de celui du maître dans l'intervalle de temps réservé TS2 de chaque trame, comme représenté à la figure 5. Ce signal indique aux autres terminaux que l'intervalle est indisponible, même s'il ne contient pas de données.

Ce mécanisme est compatible avec la gestion de priorités d'accès décrite précédemment. Les terminaux qui se partagent les intervalles restants détermineront les priorités de ces intervalles comme cela a été expliqué en relation avec les figures 4A et 4B.

Afin d'améliorer davantage la disponibilité du réseau, le procédé peut comporter une étape de division des intervalles de temps libres en sous-intervalles. Les intervalles de temps sont donc raccourcis afin d'en augmenter le nombre. Le volume de données des sous-intervalles est donc réduit, mais potentiellement, un plus grand nombre de terminaux peut émettre dans une même trame.

Dans l'exemple de la figure 6A, la trame comporte initialement six intervalles de temps. Le premier, TS1, est réservé au terminal maître, pouvant être un terminal d'utilisateur prioritaire. Les intervalles TS2 à TS6 sont associés aux utilisateurs secondaires. Compte tenu que, à la figure 6A, les intervalles de temps TS2 à TS6 sont tous libres, le niveau de priorité de ces intervalles de temps est minimum.

A la figure 6B, les intervalles de temps TS2 et TS3 sont occupés par des utilisateurs secondaires U1 et U2. Le nombre d'intervalles libres diminue et donc le niveau de priorité de ces intervalles s'incrémente. En outre, ces mêmes intervalles de temps 4 sont divisés chacun en deux sous-intervalles de temps 8. Par exemple, l'intervalle TS4, de priorité 2, est divisé en deux sous-intervalles TS41 et TS42, également de priorité 2.

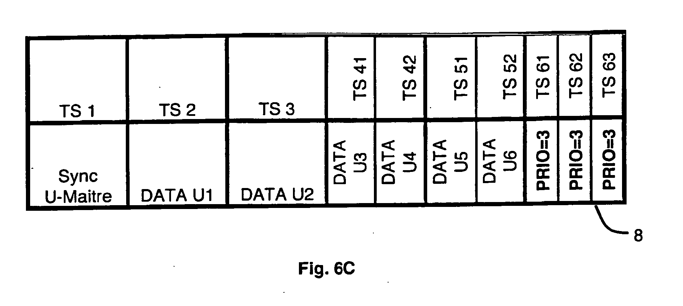

Si le réseau devient très sollicité, c'est-à-dire s'il ne reste, par exemple, qu'un seul intervalle de temps libre, celui-ci peut être divisé en trois sous intervalles TS61, TS62 et TS63 de niveau de priorité maximum, comme illustré sur la figure 6C.

La division des intervalles de temps et les niveaux de priorité sont déterminés par un même algorithme mis en oeuvre dans chaque terminal, par exemple au niveau des couches protocolaires d'acheminement des données.

De nombreuses variantes et modifications du procédé décrit ici apparaîtront à l'homme du métier. Le système a été décrit en relation avec des terminaux sans fil destinés à transmettre la voix. Il n'est pas exclu d'utiliser ces principes dans un réseau, filaire ou non, pour traiter une transmission de données entre des points de communication. Le terme « terminal » sera donc compris dans cette demande de brevet comme décrivant aussi bien un équipement qui interagit avec l'utilisateur lors d'une communication audio qu'un point de communication d'un réseau autonome d'échange de données.

## Revendications

1. Procédé de communication par multiplexage temporel entre un terminal maître et plusieurs terminaux esclaves, une transmission de données étant réalisée dans des trames (3) successives, chaque trame étant divisée en une pluralité d'intervalles de temps (4), l'un des intervalles de temps de chaque trame étant réservé au terminal maître pour émettre un signal de synchronisation (Sync), et chaque terminal étant soit en mode d'émission, soit en mode d'écoute, pendant chaque intervalle de temps (4), chaque terminal esclave sélectionnant en mode d'écoute un intervalle de temps libre dans une trame courante (6), et émettant en mode d'émission pendant au moins une trame suivante (7), des données dans l'intervalle de temps sélectionné, ledit intervalle sélectionné devenant libre dès que le terminal esclave cesse d'émettre,
procédé **caractérisé en ce que** chaque terminal esclave :
- attribue un niveau de priorité aux différents intervalles de temps libres de la trame (3), le niveau de priorité étant variable en fonction du nombre d'intervalles de temps libres ; et
- ne sélectionne un intervalle de temps (4) pour émission que si le niveau de priorité de l'intervalle est suffisamment bas.

2. Procédé selon la revendication 1, **caractérisé en ce que** le niveau de priorité des intervalles de temps (4) libres augmente lorsque le nombre d'intervalles de temps libres diminue.

3. Procédé selon l'une des revendications 1 et 2, **caractérisé en ce qu'**un terminal de priorité minimale libère de force, de sa propre initiative, l'intervalle de temps (4) qu'il occupe lorsque la trame est saturée.

4. Procédé selon l'une quelconque des revendications 1 à 3, **caractérisé en ce qu'**il comporte la réservation d'un intervalle de temps (4) à un terminal d'utilisateur prioritaire pendant toute la communication.

5. Procédé selon la revendication 4, **caractérisé en ce que** le terminal maître est un terminal d'utilisateur prioritaire.

6. Procédé selon la revendication 4, **caractérisé en ce que** chaque terminal esclave d'utilisateur prioritaire émet dans l'intervalle de temps (4) qui lui est réservé un signal de synchronisation différent de celui du maître.

7. Procédé selon l'une quelconque des revendications 1 à 6, **caractérisé en ce qu'**il comporte une étape de division de chaque intervalle de temps (4) libre en des sous-intervalles (8), chaque sous-intervalle étant disponible pour un terminal différent.

8. Procédé selon la revendication 7, **caractérisé en ce que** le nombre de sous-intervalles (8) par intervalle augmente quand le nombre d'intervalles de temps (4) libres diminue.

## Patentansprüche

1. Kommunikationsverfahren durch Zeitmultiplexierung zwischen einem Master-Endgerät und mehreren Slave-Endgeräten, wobei eine Datenübertragung in aufeinanderfolgenden Rastern (3) erfolgt, wobei jedes Raster in eine Vielzahl von Zeitintervallen (4) unterteilt ist, wobei eines der Zeitintervalle jedes Rasters für das Master-Endgerät reserviert ist, um ein Synchronisierungssignal (Sync) zu senden, und jedes Endgerät während jedes Zeitintervalls (4) entweder im Sendemodus oder im Empfangsmodus ist, wobei jedes Slave-Endgerät im Empfangsmodus ein freies Zeitintervall in einem laufenden Raster (6) wählt und im Sendemodus während mindestens einem folgenden Raster (7) Daten im ausgewählten Zeitintervall sendet, wobei das ausgewählte Intervall frei wird, sobald das Slave-Endgerät das Senden einstellt,
wobei das Verfahren **dadurch gekennzeichnet ist, dass** jedes Slave-Endgerät:
- den verschiedenen freien Zeitintervallen des Rasters (3) ein Prioritätsniveau zuweist, wobei das Prioritätsniveau in Abhängigkeit von der Anzahl der freien Zeitintervalle variabel ist, und
- nur dann ein Zeitintervall (4) zum Senden auswählt, wenn das Prioritätsniveau des Intervalls ausreichend niedrig ist.

2. Verfahren nach Anspruch 1, **dadurch gekennzeichnet, dass** das Prioritätsniveau der freien Zeitintervalle (4) zunimmt, wenn die Anzahl freier Zeitintervalle abnimmt.

3. Verfahren nach einem der Ansprüche 1 und 2, **dadurch gekennzeichnet, dass** ein Endgerät mit minimaler Priorität das Zeitintervall (4), das es belegt, gezwungenermaßen aus eigener Initiative freigibt, wenn das Raster gesättigt ist.

4. Verfahren nach einem der Ansprüche 1 bis 3, **dadurch gekennzeichnet, dass** es die Reservierung eines Zeitintervalls (4) für ein prioritäres Benutzerendgerät während der gesamten Kommunikation aufweist.

5. Verfahren nach Anspruch 4, **dadurch gekennzeichnet, dass** das Master-Endgerät ein prioritäres Benutzerendgerät ist.

6. Verfahren nach Anspruch 4, **dadurch gekennzeichnet, dass** jedes prioritäre Slave-Benutzerendgerät in dem Zeitintervall (4), das für es reserviert ist, ein Synchronisierungssignal sendet, das sich von dem des Masters unterscheidet.

7. Verfahren nach einem der Ansprüche 1 bis 6, **dadurch gekennzeichnet, dass** es einen Schritt der Teilung jedes freien Zeitintervalls (4) in Unterintervalle (8) aufweist, wobei jedes Unterintervall für ein unterschiedliches Endgerät verfügbar ist.

8. Verfahren nach Anspruch 7, **dadurch gekennzeichnet, dass** die Anzahl der Unterintervalle (8) je Intervall zunimmt, wenn die Anzahl der freien Zeitintervalle (4) abnimmt.

## Claims

1. A communication method using time multiplexing between a master terminal and several slave terminals, data transmission being done in successive frames (3), each frame being divided into a plurality of timeslots (4), one of the timeslots of each frame being reserved for the master terminal to transmit a synchronization signal (Sync), and each terminal being either in transmission mode or in listening mode during each timeslot (4), each slave terminal selecting, in listening mode, a free timeslot in a current frame (6), and transmitting, in transmission mode, for at least one subsequent frame (7), data in the selected timeslot, said selected timeslot becoming free once the slave terminal stops transmitting,
the method being **characterized in that** each slave terminal:
- assigns a priority level to the various free timeslots of the frame (3), the priority level varying as a function of the number of free timeslots; and
- only selects a timeslot (4) for transmission if the priority level of the slot is low enough.

2. The method according to claim 1, **characterized in that** the priority level of the free timeslots (4) increases when the number of free timeslots decreases.

3. The method according to one of claims 1 and 2, **characterized in that** a minimum priority terminal is forced, at its own initiative, to release the timeslot (4) it occupies when the frame is saturated.

4. The method according to any one of claims 1 to 3, **characterized in that** it includes reserving a timeslot (4) for a priority user terminal throughout the entire communication.

5. The method according to claim 4, **characterized in that** the master terminal is a priority user terminal.

6. The method according to claim 4, **characterized in that** each priority user slave terminal transmits, in the timeslot (4) reserved for it, a synchronization signal different from that of the master.

7. The method according to any one of claims 1 to 6, **characterized in that** it includes a step for dividing each free timeslot (4) into sub-slots (8), each sub-slot being available for a different terminal.

8. The method according to claim 7, **characterized in that** the number of sub-slots (8) per slot increases when the number of free timeslots (4) decreases.
